# EUROPÄISCHE PATENTANMELDUNG

(11) **EP 1 793 474 A2**
(43) Veröffentlichungstag der Anmeldung: **06.06.2007**
(21) Anmeldenummer: 06023705.4
(22) Anmeldetag: 15.11.2006
(51) Int. Cl.: H02K 5/173, F16C 19/00

(54) **Wälzlageranordnung mit einer elektrisch isolierenden Beschichtung**

(30) Priorität: 02.12.2005 DE 10557613
(71) Anmelder: Schaeffler KG, 91074 Herzogenaurach (DE)
(72) Erfinder: Schmucker, Günther, 97464 Niederwerm (DE); Beresch, Eduard, 97529 Sulzheim (DE); Martin, Gudrun, 97502 Euerbach (DE)

(57) **Zusammenfassung**

Eine Wälzlageranordnung mit einem Außenring (2), einem Innenring (3), einer Vielzahl von zwischen dem Außenring (2) und dem Innenring (3) angeordneten Wälzkörpern (5) und einem Isolierelement (6), welches mit dem Außenring (2) oder dem Innenring (3) in Kontakt steht. Dabei weist erfindungsgemäß das Isolierelement (6) eine elektrisch isolierende Beschichtung (8) auf.

## Beschreibung

### Gebiet der Erfindung

Die vorliegende Erfindung bezieht sich auf eine Wälzlageranordnung. Die Erfindung wird unter Bezugnahme auf Wälzlager beschrieben, die bei Antriebseinheiten von Schiffen Anwendung finden. Es wird jedoch darauf hingewiesen, dass die erfindungsgemäße Wälzlageranordnung auch bei anderen Lagern Anwendung finden kann.

Im Schiffbau werden heute so genannte POD (Propulsion Drive) Antriebseinheiten eingesetzt. Bei diesen Antriebseinheiten befinden sich in einem Antriebsaggregat sowohl ein Elektromotor als auch Lagereinheiten. Bei derartigen POD Antriebseinheiten besteht grundsätzlich die Gefahr von Stromdurchgängen insbesondere durch Änderungen in den heute verwendeten Gleichrichtern. Derartige Stromdurchgänge sind unerwünscht und sollen daher durch Isolationsmaßnahmen verhindert werden.

Dabei sollen insbesondere auch die verwendeten Lager einen Isolationsschutz bieten, wobei ein Isolationsschutz bis 10 kV wünschenswert ist. Aus dem Stand der Technik sind verschiedene Methoden der Stromisolierung bekannt. So ist es möglich, die Stromisolierung über eine Keramikbeschichtung zu bewirken. Bei einer Keramikbeschichtung ist jedoch die geforderte Isolierung für die oben genannten hohen Spannungen nur mit sehr dicken Schichten durchführbar. Daneben besteht die Gefahr von Abplatzungen.

Weiterhin sind Kunstharzbeschichtungen auf Gehäusen bekannt, z.B. zwischen Verschraubung, Gehäuse/Fundament. Da jedoch bei diesen Ausführungen das Gehäuse isoliert wird, muss jedes Element, das von dem Gehäuse ausgeht, getrennt isoliert werden wie beispielsweise Rohrverbindungen und dergleichen. Damit ist auch diese Art der Isolierung sehr aufwändig.

Der vorliegenden Erfindung liegt daher die Aufgabe zugrunde, ein Wälzlager mit einer elektrischen Isolierung zur Verfügung zu stellen, wobei die Isolierung einerseits einen sehr hohen Widerstand gegen Stromdurchgang gewährleistet, daneben aber auch unempfindlich gegenüber Stößen ist und schließlich eine ausreichende Härte aufweist, um während des Betriebs maßhaltig zu sein. Dies wird erfindungsgemäß durch eine Wälzlageranordnung nach Anspruch 1 und ein Isolierelement nach Anspruch 8 erreicht. Vorteilhafte Ausführungsformen und Weiterbildungen sind Gegenstand der Unteransprüche. Es wird jedoch darauf hingewiesen, dass nicht alle erfindungsgemäßen Aufgaben notwendigerweise durch die Gegenstände aller Unteransprüche erreicht werden.

Die erfindungsgemäße Wälzlageranordnung weist einen Außenring auf, einen Innenring und eine Vielzahl von zwischen dem Außenring und dem Innenring angeordneten Wälzkörpern. Daneben ist ein Isolierelement vorgesehen, welches mit dem Außenring oder dem Innenring in Kontakt, d.h. in Berührkontakt, insbesondere in Form- Kraft- und/oder Stoffschluss, steht oder auch nur in Anordnungskontakt, d.h. in unmittelbarer benachbarter Anordnung gegebenenfalls auch ohne unmittelbare Berührung, steht. Erfindungsgemäß weist das Isolierelement eine elektrisch isolierende Beschichtung auf.

Unter einem Isolierelement wird jedes Element verstanden, welches geeignet ist, einen Körper gegenüber einem anderen Körper elektrisch zu isolieren.

Bevorzugt steht das Isolierelement mit dem Außenring in Kontakt.

Dabei kann es sich bei dem Isolierelement beispielsweise um einen Zwischenträger wie einen Winkelring im Falle von Axiallagern oder um eine Buchse bei anderen Lagerbauformen handeln, die mit ihrer isolierenden Beschichtung in Gehäusekörpern eingesetzt werden können.

Durch diese Ausführungsform wird bewirkt, dass das vollständige Gehäuse des Wälzlagers isoliert wird, und damit keine zusätzliche Isolation für alle abgehenden Elemente wie Rohrverbindung und dergleichen nötig ist. Es wäre jedoch auch möglich, dass bei anderen Ausführungsformen das Isolierelement mit dem Innenring oder das Isolierelement mit dem Gehäusekörper in Kontakt steht.

Bei einer weiteren bevorzugten Ausführungsform ist die Beschichtung an einer dem Außenring zugewandten Oberfläche des Isolierelements angeordnet. Dies bedeutet, dass zwischen dem Isolierelement und dem Außenring die elektrische Isolation auftritt.

Es wäre prinzipiell auch möglich, die Beschichtung an einer anderen Oberfläche des Isolierelements vorzusehen, in diesem Falle müssten jedoch größere Oberflächen mit der Beschichtung versehen werden.

Bei einer weiteren bevorzugten Ausführungsform weist die Beschichtung eine Dicke auf, die zwischen 20 µm und 10000 µm und bevorzugt zwischen 100 µm und 1000 µm liegt. Die Wahl der Schichtdicke muss einerseits der geforderten Isollerwirkungen wie beispielsweise einer elektrischen Isolierung bis 10 kV angemessen sein, und andererseits muss auch dem Kostenfaktor der teilweise teuren Beschichtung Rechnung getragen werden.

Bei einer weiteren bevorzugten Ausführungsform ist die Beschichtung aus einem Material hergestellt, das aus einer Gruppe von Materialien ausgewählt ist, welche PEEK, POM, PET, Glas, Kombinationen hieraus und dergleichen enthält. Besonders bevorzugt wird als Material der Beschichtung PEEK (Polyetheretherketon) verwendet. Dieses Material zeichnet sich durch eine sehr gute Temperaturfestigkeit aus, durch eine hohe mechanische Festigkeit, eine hohe Steifigkeit sowie ein günstiges Gleit- und Abriebverhalten. Prinzipiell wäre es auch möglich, die Beschichtung nicht an dem Isolierelement anzubringen, sondern direkt an dem Außenring oder dem Innenring des Wälzkörpers. Die Anmelderin behält sich vor, Teilanmeldungen auch auf ein Wälzlager, das ein mit PEEK oder einem anderen Isoliermaterial beschichtetes Element, und insbesondere einen derart beschichteten Lagerring aufweist, zu richten.

Das Material PEEK muss jedoch bei Temperaturen von ca. 400 Grad ausgehärtet werden. Dies erschwert die Beschichtung am Wälzlagerring, da durch diese hohen Temperaturen die gehärteten Laufbahnen des Wälzlagerrings beschädigt werden können. Daher wird die Beschichtung vorzugsweise nicht direkt an einem Lagerring des Wälzlagers angebracht, sondern an dem oben erwähnten Isolierelement. Anschließend wird das Isolierelement bearbeitet und mit dem Lager und dem Gehäuse zusammengepasst. Auf diese Weise wird eine Isolation der Lagerelemente gegenüber dem Gehäuse erreicht.

Bei einer weiteren bevorzugten Ausführungsform weist das Isolierelement eine im Wesentlichen kreisringförmige Struktur auf. Dabei ist bevorzugt die vollständige Oberfläche, die mit dem Außenring in Berührung steht, mit der isolierenden Beschichtung versehen. Bei einer weiteren bevorzugten Ausführungsform weist das Isolierelement einen in Richtung des Außenrings weisenden Umfangsrand auf. Bevorzugt kann das Isolierelement in der Art eines Deckels auf den Außenring aufgesetzt werden.

In einer weiteren Ausführungsform weist das Isolierelement eine zylinderförmige Struktur auf und ist insbesondere als Buchse ausgeführt. In diesem Fall ist insbesondere die Innenoberfläche des Isolierelements mit einer Isolierschicht versehen.

Die vorliegende Erfindung ist weiterhin auf ein Isolierelement, insbesondere für ein Wälzlager gerichtet, wobei das Isolierelement wenigstens eine elektrisch isolierende Beschichtung aufweist. Dabei ist erfindungsgemäß die Beschichtung aus einem Material hergestellt, das aus einer Gruppe von Materialien ausgewählt ist, welche PEEK, POM, PET, Glas, Kombinationen hieraus, und dergleichen enthält. Besonders bevorzugt wird PEEK als Material für die Beschichtung verwendet, da es sich durch die oben genannten Vorteile auszeichnet. Vorzugsweise wird für das Zwischenelement eine Dicke ausgewählt, die zwischen 20 µm und 10000 µm und bevorzugt zwischen 100 µm und 1000 µm liegt.

Die Erfindung ist ferner auf die Verwendung von Polyetheretherketon (PEEK) zur Beschichtung von Elementen eines Wälzlagers gerichtet. Vorzugsweise können das oben genannte Isolierelement, der Außenring und/oder der Innenring mit dem Material PEEK beschichtet werden.

Weitere Vorteile und Ausführungsformen der vorliegenden Erfindung ergeben sich aus den beigefügten Zeichnungen. Darin zeigen:
- Fig. 1: eine schematische Darstellung einer erfindungsgemäßen Lageranordnung;
- Fig. 2: eine Draufsicht auf die Lagerordnung aus Fig. 1;
- Fig. 3: eine Schrägansicht der Lageranordnung aus Fig. 1;
- Fig. 4: eine Detaildarstellung der Lageranordnung aus Fig. 1;
- Fig. 5: eine Detailansicht eines Isolierelements;
- Fig. 6: eine Seitenansicht des Isolierelement;
- Fig. 7: eine Draufsicht auf das Isolierelement aus Fig. 6;
- Fig. 8: eine Schrägansicht des Isolierelements aus Fig. 7 und
- Fig. 9: eine schematische Darstellung einer weiteren erfindungsgemäßen Lageranordnung.

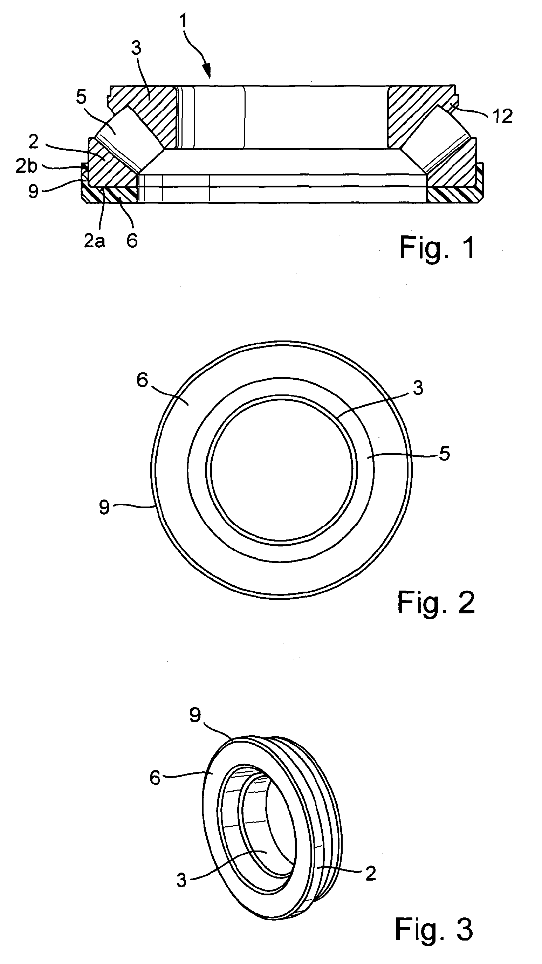

Fig. 1 zeigt eine schematische Darstellung einer erfindungsgemäßen Wälzlageranordnung 1. Diese weist einen Innenring 3 auf, der mit einer Vielzahl von Wälzkörpern 5 gegenüber einem Außenring 2 drehbar gelagert ist.

Dabei weist bei dieser Ausführungsform der Innenring 3 einen Bord 12 auf, der die Wälzkörper 5 in deren axialer Richtung stabilisiert. Daneben kann ein (nicht gezeigter) Käfig vorgesehen sein, in dem die einzelnen Wälzkörper 5 geführt werden. Dieser Käfig kann aus Metall wie beispielsweise Messing aber auch aus Kunststoff bestehen. Das Bezugszeichen 6 bezieht sich auf ein Isolierelement, welches in Kontakt mit dem Außenring 2 steht. Dabei liegt der Außenring 2 sowohl mit seiner Unterseite 2a als auch mit der seitlichen Oberfläche 2b an dem Isolierelement 6 an.

Fig. 2 zeigt eine Draufsicht auf die Wälzlageranordnung aus Fig. 1. Dabei bezieht sich das Bezugszeichen 9 auf einen Rand des Isolierelementes 6. Radial innen bezüglich des Isolierelements 6 sind die Wälzkörper 5 bzw. deren Stirnflächen sichtbar. Innerhalb der Wälzkörper ist ein Abschnitt des Innenrings 3 erkennbar.

Fig. 3 zeigt eine Schrägansicht der in den Figuren 1 und 2 gezeigten Wälzlageranordnung. In dieser Schrägansicht ist neben den in Fig. 2 gezeigten Komponenten auch ein äußerer Abschnitt des Außenrings 2 erkennbar.

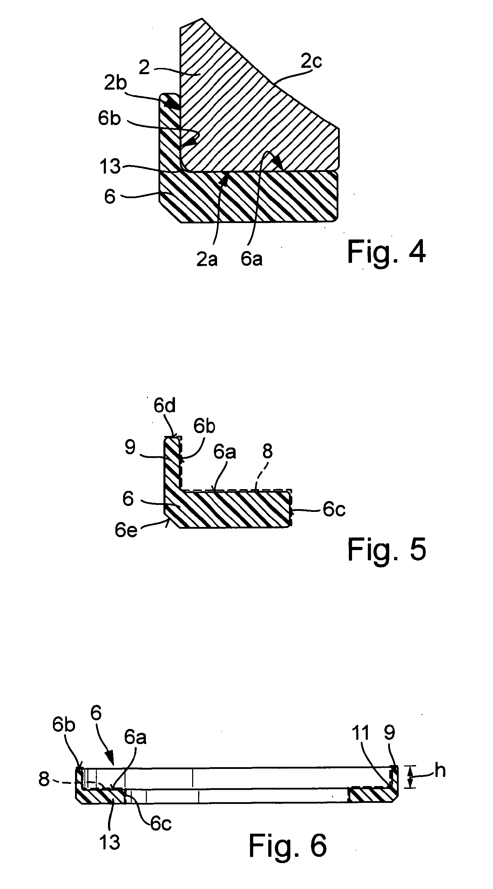

Fig. 4 zeigt eine Detaildarstellung der in Fig. 1 gezeigten Wälzlageranordnung, genauer gesagt einen Abschnitt des Isolierelements 6 mit dem Außenring 2. Wie Eingangs erwähnt, ist eine ausreichende Stromisolierung zwischen der Lageranordnung und der Umgebung zu erreichen. Zu diesem Zweck ist zwischen den Oberflächen 2a und 2b des Außenrings einerseits und den Flächen 6a und 6b des Isolierelements 6 andererseits eine Isolierschicht bzw. Beschichtung vorgesehen. Diese Beschichtung ist an dem Isolierelement 6 angeordnet. Die Lauffläche 2c des Außenrings ist bei dieser Ausführungsform konkav ausgeführt und die Mantelfläche der Wälzkörper 5 (vgl. Fig. 1) ist bei dieser Ausführungsform entsprechend konvex ausgeführt. Es können jedoch auch andere Oberflächengestaltungen vorgesehen sein.

In dem Bereich der Kante zwischen den Flächen 2a und 2b liegt der Außenring 2 bei dieser Ausführungsform nicht an dem Isolierelement 6 an.

Fig. 5 zeigt eine teilweise Ansicht des Isolierelements 6. Man erkennt, dass an den Oberflächen 6a und 6b eine Beschichtung 8 aufgetragen ist. Diese Beschichtung besteht in dieser Ausführungsform aus PEEK. Dieser Kunststoff ist ein guter Isolator und hat eine für einen Kunststoff hohe Härte. Der Kunststoff muss jedoch bei einer Temperatur von ca. 400 Grad ausgehärtet werden, und daher kann die Beschichtung bei dieser Ausführungsform nicht direkt in dem Wälzlagerring 2 aufgebracht werden, da sonst Beschädigungen insbesondere der Laufbahnen 2c des Außenrings 2 auftreten würden.

In Fig. 5 ist erkennbar, dass neben den Oberflächen 6a und 6b des lsolierelements 6 auch dessen Oberflächen 6c und 6d beschichtet sind, die nicht mit dem Außenring 2 in Kontakt stehen. Die Beschichtung an den Oberflächen 6c und 6d des Isolierelements verhindert, dass es zu Funkenüberschlägen zwischen dem Außenring 2 und Isolierelement 6 kommt. Die Beschichtung 8 wird mit Hilfe einer Sprüheinrichtung auf die zu beschichteten Oberflächen des Isolierelements aufgetragen. Vorzugsweise werden die zu beschichteten Oberflächen beispielsweise durch Sandstrahlen vor dem Beschichtungsvorgang aufgerauht.

Die jeweiligen Kanten zwischen den Flächen 6a, 6b, 6c und 6c sind jeweils abgerundet. Der Eckbereich 6e des Isolierelements 6 ist zurückgenommen wodurch das Einpressen in ein Gehäuse erleichtert wird.

Fig. 6 zeigt eine Draufsicht auf ein erfindungsgemäßes Zwischenelement. Die PEEK Beschichtung 8 weist eine Dicke zwischen 100µm und 1000µm auf.

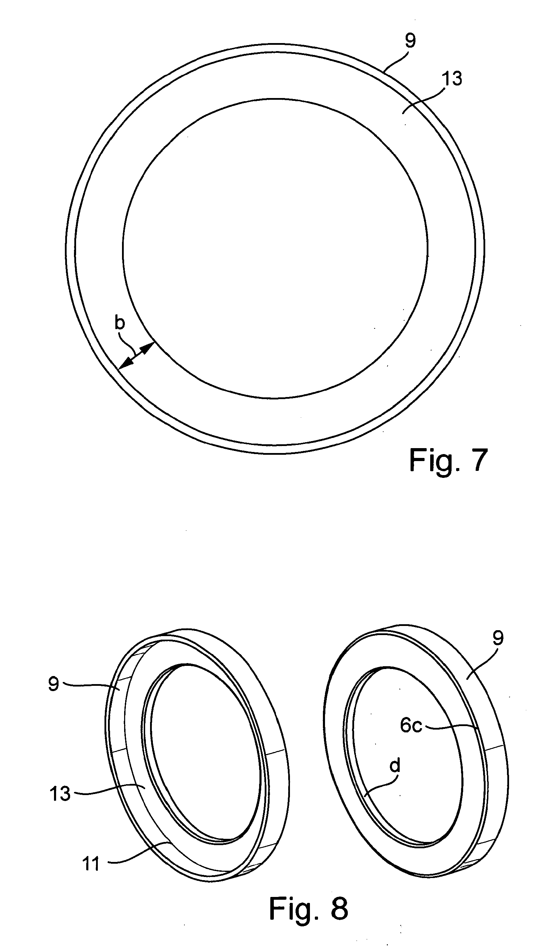

Fig. 7 zeigt eine Draufsicht auf ein Isolierelement 6. Die Geometrien dieses Isolierelements d. h. die Breite b der Oberfläche 6a des Isolierelements 6, die Dicke d des Materials (vgl. Fig. 8) und die Höhe h des Rands 9 hängen von den baulichen Erfordernissen und der erforderlichen Stabilität ab. Der Außenring 2 stützt sich in axialer Richtung des Wälzlagers an einem ringförmigen Abschnitt 13 des Isolierelements 6 mit der Dicke d ab.

Fig. 8 zeigt zwei Schrägansichten des erfindungsgemäßen Isolierelements 6. Man erkennt, dass der Eckbereich 11, in dem die Fläche 6a und die Fläche 6b des Isolierelements zusammenlaufen, abgerundet ist. An diesem Eckbereich 11 liegt, wie sich aus Fig. 4 ergibt, der entsprechende Eckbereich des Außenrings nicht vollständig an, sondern es verbleibt ein geringer Zwischenraum zwischen der Außenoberfläche des Außenrings 2 und der Innenoberfläche des Isolierelements 6.

In den obigen Figuren ist das Isolierelement 6 in der Ausführungsform eines Winkelrings gezeigt. Bei dem Isolierelement könnte es sich jedoch auch um einen Buchse handeln. Auch bei dieser Ausführungsform weist eine erfindungsgemäße Wälzlageranordnung neben einem Außenring und einem Innenring und den Wälzkörpern ein Isolierelement in Form einer Buchse mit einer oben beschriebenen Beschichtung auf.

Grundsätzlich kann jedoch ein Isolierelement mit einer erfindungsgemäßen Isolierschicht bei jedem Lagertyp angewandt werden, der eine hohe Stromisolierung zur Verfügung stellen muss.

Das Isolierelement 6 kann an dem Lager bzw. einzelner dessen Komponenten angebracht werden oder auch in einem Lagergehäuse vorgesehen sein. Bei Radiallagern wird vorzugsweise das Isolierelement in dem Gehäuse angeordnet sein und bei Axiallagern an dem Außenring oder an der Gehäusescheibe.

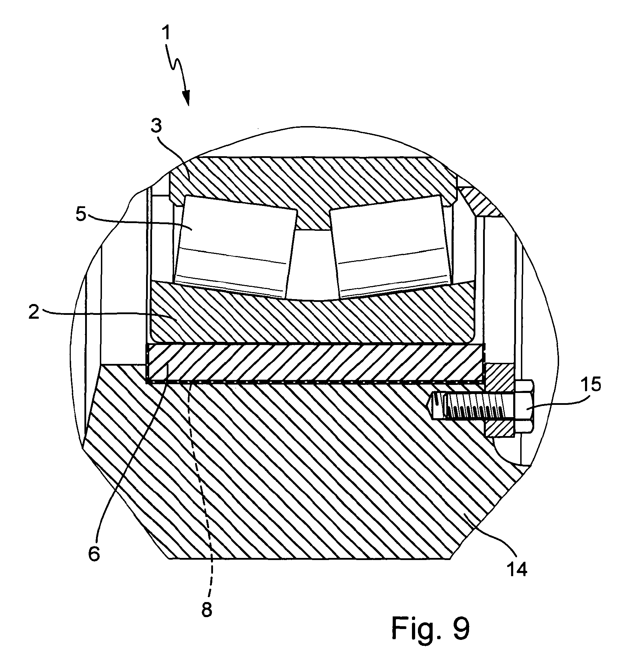

Fig. 9 zeigt eine schematische Darstellung einer weiteren erfindungsgemäßen Wälzlageranordnung 1. Diese weist ebenfalls einen Innenring 3 auf, der mit einer Vielzahl von Wälzkörpern 5 gegenüber einem Außenring 2 drehbar gelagert ist. Diese Wätzlageranordnung ist in einem Gehäuse 14 angeordnet.

Wie Fig.9 zeigt, ist das Isolierelement als Buchse 6 ausgeführt, die mit ihrer isolierenden Beschichtung 8 im Gehäuse 14 bzw. im Gehäusekörpern 14 eingesetzt und über einen Verschraubung 15 mit Deckel dort verschraubt ist.

In diesem Fall steht das Isolierelement 6 mit dem Außenring 2 des Wälzlagers 1 in Anordungskontakt, wobei ein minimaler Spalt zwischen Außenring 2 und Isolierelement 6 verbleibt. Das Isolierelement 6 steht weiter unmittelbar mit dem Gehäuse 14 in Kontakt, wobei die Isolationswirkung unmittelbar gegenüber dem Gehäuse 14 erfolgt.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichen

- 1: Wälzlageranordnung
- 2: Außenring
- 2a: Unterseite des Außenrings 2
- 2b: seitlicher Abschnitt des Außenrings 2
- 2c: Lauffläche des Außenrings
- 3: Innenring
- 5: Wälzkörper
- 6: Isolierelement
- 6a, 6b,6c, 6d: Oberflächen des Isolierelements 6
- 6e: Eckbereich des Isolierelements
- 8: Beschichtung
- 9: Rand des Isolierelements 6
- 11: Eckbereich des Isolierelements 6
- 12: Bord des Innenrings
- 13: ringförmiger Abschnitt des Isolierelements 6
- d: Dicke Materials des Isolierelements 6
- h: Höhe des Rands 9
- b: Breite des ringförmigen Abschnitts 13
- 14: Gehäuse
- 15: Verschraubung

## Patentansprüche

1. Wälzlageranordnung (1) mit einem Außenring (2), einem Innenring (3), einer Vielzahl von zwischen dem Außenring (2) und dem Innenring (3) angeordneten Wälzkörpern (5) und einem Isolierelement (6), welches mit dem Außenring (2) oder dem Innenring (3) in Kontakt (Berühr-/Anordungskontakt) steht, wobei das Isolierelement (6) eine elektrisch isolierende Beschichtung (8) aufweist.

2. Wälzlageranordnung (1) nach Anspruch 1,
**dadurch gekennzeichnet, dass**
das Isolierelement (6) mit dem Außenring (2) in Kontakt steht.

3. Wälzlageranordnung (1) nach wenigstens einem der vorangegangenen Ansprüche,
**dadurch gekennzeichnet, dass**
die Beschichtung (8) an einer dem Außenring (2) zugewandten Oberfläche (6a, 6b) des Isolierelements (6) angeordnet ist.

4. Wälzlageranordnung (1) nach wenigstens einem der vorangegangenen Ansprüche,
**dadurch gekennzeichnet, dass**
die Beschichtung eine Dicke aufweist, die zwischen 20 µm und 10.000 µm und bevorzugt zwischen 100 µm und 1.000 µm liegt.

5. Wälzlageranordnung (1) nach wenigstens einem der vorangegangenen Ansprüche,
**dadurch gekennzeichnet, dass**
die Beschichtung (8) aus einem Material hergestellt ist, das aus einer Gruppe von Materialien ausgewählt ist, welche PEEK, POM, PET, Glas und dergleichen oder Kombinationen hieraus enthält.

6. Wälzlageranordnung (1) nach wenigstens einem der vorangegangenen Ansprüche,
**dadurch gekennzeichnet, dass**
das Isolierelement eine im Wesentlichen kreisringförmige Struktur aufweist.

7. Wälzlageranordnung (1) nach wenigstens einem der vorangegangenen Ansprüche,
**dadurch gekennzeichnet, dass**
das Isolierelement (6) einen in Richtung des Außenrings (2) weisenden Umfangsrand aufweist.

8. Wälzlageranordnung (1) nach wenigstens einem der vorangegangenen Ansprüche,
**dadurch gekennzeichnet, dass**
das Isolierelement (6) eine zylinderförmige Struktur aufweist.

9. Isolierelement (6), insbesondere für ein Wälzlager, mit wenigstens einer Oberfläche (6a, 6b, 6c, 6d), die mit einer isolierenden Beschichtung (8) versehen ist,
**dadurch gekennzeichnet, dass**
die Beschichtung (8) aus einem Material hergestellt ist, das aus einer Gruppe von Materialien ausgewählt ist, welche PEEK, POM, PET, Glas, Kombinationen hieraus oder dergleichen enthält.

10. Isolierelement nach Anspruch 9,
**dadurch gekennzeichnet, dass**
die Beschichtung eine Dicke aufweist, die zwischen 20 µm und 10.000 µm und bevorzugt zwischen 100 µm und 1.000 µm liegt.

11. Verwendung von Polyetheretherketon (PEEK) zur Beschichtung von Elementen eines Wälzlagers.
